# NEW EUROPEAN PATENT SPECIFICATION

(11) **EP 0 083 460 B2**
(45) Date of publication and mention of the opposition decision: **10.05.1995**
(45) Mention of the grant of the patent: 25.01.1989
(21) Application number: 82201644.0
(22) Date of filing: 21.12.1982
(51) Int. Cl.: A01D 75/20, A01B 73/00

(54) **Agricultural implement**
Landwirtschaftliches Gerät
Appareil agricole

(30) Priority: 22.12.1981 NL 8105770
(43) Date of publication of application: 13.07.1983
(73) Proprietor: C. van der Lely N.V., NL-3155 PD Maasland (NL)
(72) Inventor: van der Lely, Ary, Maasland (NL); Bom, Cornelis J. G., Rozenburg (NL)
(74) Representative: Mulder, Herman

(56) References cited:
- DE-A- 1 482 104
- DE-A- 1 482 870
- DE-A- 1 582 369
- DE-A- 3 031 837
- DE-U- 1 998 710
- FR-A- 1 480 616
- FR-A- 2 063 497

## Description

The invention relates to an agricultural implement comprising a frame connectable to a tractor and constituted by an inner main frame beam and further outer frame beams pivotable with respect to said main frame beam about pivot shafts substantially in the direction (A) of operative travel, which main frame beam and further frame beams extend in a first, operative position in a substantially horizontal direction transverse to the direction (A) of operative travel, the implement further comprising tractor drivable inner and outer rake members, each of the rake members comprising a plurality of spokes to the ends of which are secured groups of tines, the inner rake members being coupled to said main frame beam, the outer rake members being coupled to said further frame beams, and with said further frame beams pivotable upwardly around said pivot shafts in a second transport position, the inner and outer rake members in the first position being rotatable about upwardly directed rotary shafts, the implement still further comprising for each outer frame beam at each side of the main frame beam a protective member which, with respect to the direction (A) of operative travel, protects in said first position of said rake members e.g. persons from contact with at least a foremost part of a rake member, connecting means are provided between each protective member and its corresponding outer rake member to permit that said protective members be moved into another position by moving the outer rake members into the second position.

An agricultural implement of this kind is known from DE-A-14 82 104 (Fig. 5) which describes a haymaking machine with upwards movable rake members and a protective member constituted by protective elements partially around the outermost rake members and in a fixed position relative to these outer rake members and by chains or rope-like elements connecting the protective elements before and behind the row of rake members. In the transport position the protective member has completely lost its protective function.

The invention has for its object to provide the performance of a further task of the protective member in order to utilize it more effectively, particularly in the transport position of the implement.

According to the invention, the implement is characterized in that each of the protective members (22) is rigid and embraces at least the foremost half of a respective rake member and that adjusting means, different from the connecting means, are provided, which limit the movement of the protective members caused by the outer rake members such that the movement of the protective members is modified with respect to the movement which these would have if no adjusting means were provided, and such that the position of the protective members relative to the respective outer rake members is automatically changed by moving the outer rake members hydraulically into the second position, the other position of the protective members being forward and at least partially laterally outboard of the respective outer rake membes, whereby protection of e.g. persons from contact with at least a foremost part of the outer rake member is maintained.

For a better understanding of the invention and to show how the same may be carried into effect reference will be made by way of example to the accompanying drawing.

Fig. 1 is a plan view of an embodiment of an agricultural machine according the invention attached to a tractor.

Fig. 2 is an enlarged view of part of Fig. 1.

Fig. 3 is a side elevation of the machine shown in Fig. 1.

Fig. 4 is a partly sectional elevational view taken on the lines IV-IV in Fig. 2.

Fig. 5 is a partly sectional elevational view taken on the lines V-V in Fig. 2.

Fig. 6 is a partly sectional elevational view taken on the lines VI-VI in Fig. 2.

Fig. 7 is a plan view of the machine of the preceding Figures in a transport position.

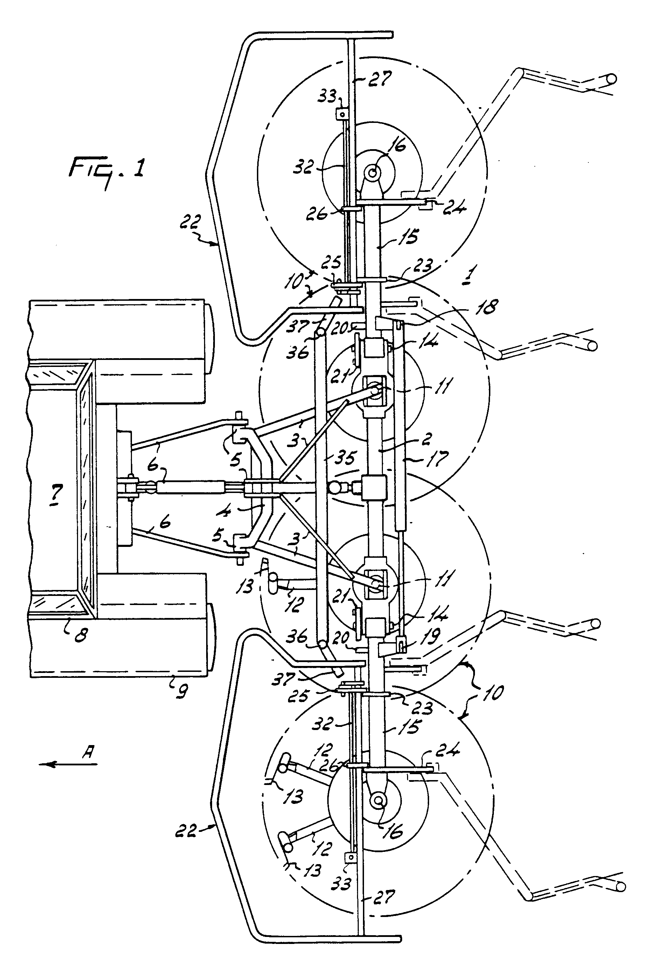

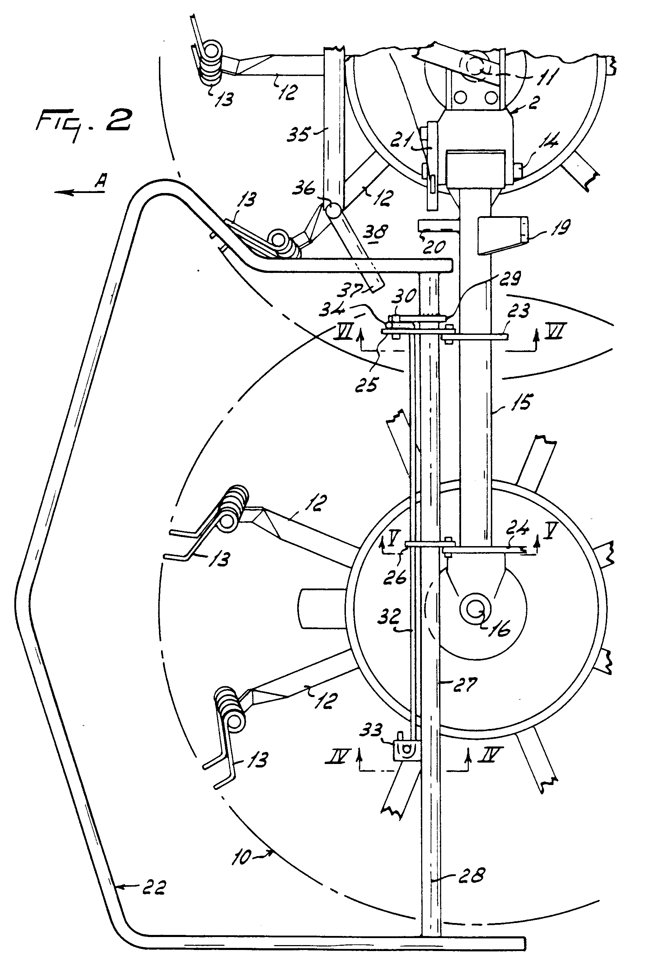

Fig. 1 shows a plan view of a rotary haymaking machine hitched to a tractor in a first embodiment of the agricultural implement in accordance with the invention, whilst the parts most important for the invention are shown in Fig. 2 on an enlarged scale. Apart from the screening members and their mode of fastening in accordance with the invention, the further part of the rotary haymaking machine is shown in a general view.

The rotary haymaking machine 1 comprises a main frame beam 2, which is substantially horizontal and extends transversely of the direction of travel A. The main frame beam 2 is rigidly secured by means of supports 3 to a trestle 4 in the form of an inverted U provided near the top and near the two lower ends with connecting means 5, to each of which can be fastened one of the arms 6 of the three-point lifting device of a tractor 7. Of the tractor 7 only the rear part of the tractor is shown, comprising a cab 8 and mudguards 9 covering ground wheels of the tractor on the top and rear sides.

Near the two ends of the main frame beam 2 rake members 10 are journalled so as to be drivable in known manner from the tractor 7 about upwardly directed rotary shafts 11. Each of the rake members 10 comprises in this embodiment a plurality of spokes 12, to the ends of which are secured groups of tines 13, the tines being first downwardly inclined away from the ends of the associated spokes 12 and being then outwardly bent over so as to be directed substantially parallel to a plane at right angles to the rotary shaft 11 concerned. Therefore, viewed in the direction of the associated rotary shaft 11 the tine ends are located at a distance below the free end of a spoke 12. To the ends of the spokes 12 of the rake members may, of course, also be secured tines which extend downwards or which are outwardly and downwardly inclined in the operative position. Near each end of the main frame beam 2 is provided a bearing for a pivotal shaft 14, which is directed substantially horizontally and parallel to the direction of travel A. About each of the pivotal shafts 14 is pivotable a frame beam 15, which, in operation, is substantially in line with the frame beam 2. Near the outermost end of each frame beam 15 is journalled a rake member 10, which can be driven by means of the tractor about a rotary shaft 16 extending parallel to the rotary shaft 11 during operation. The structures of the two outermost rake members 10 are identical to those of the two inner rake members 10 and may, therefore, be provided with tines or groups of tines extending outwardly or with groups of tines directed fully downwards, in which case the tine ends are located at a distance below the spokes 12.

The rotary hay-making machine 1 may be provided with pairs of swath boards which can be set both in an operative position and an inoperative position with respect to the rest of the machine.

Each of the four rake members 10 is supported in known manner by a ground wheel, which may in this case be freely pivotable about the associated rotary shaft 11 or 16 respectively.

During operation the two frame beams 15 together with the outermost rake members 10 fastened to them can freely turn up and down about the associated pivotal shaft 14 in order to permit the outermost rake members 10 to match unevenness of the ground.

A second function known *per se* of the pivotal shafts 14 lies in that for transport purposes the two outer frame beams 15 with the outermost rake members 10 fastened to them can be tilted up in a manner such that the frame beams 15 extend upwardly. This latter possibility provides a smaller width of the machine during transport.

In the rotary haymaking machine shown in Fig. 1 tilting up the two frame beams 15 with the outermost rake members 10 fastened thereto is performed by a hydraulic ram 17 connected with the hydraulic system of the tractor 7 and controllable from the cab 8. The hydraulic ram 17 is a single-action ram; after hydraulic energization of the ram its piston rod slides inwardly into the cylinder space. The end of the cylinder itself is fastened to the frame beam by means of an upwardly directed support 18 rigidly secured to one of the frame beams 15, whereas the end of the piston rod is pivotally connected in a similar manner with the frame beam by means of an upwardly directed support 19 rigidly secured to the other frame beam 15.

After energization of the hydraulic ram 17 the two frame beams 15 are turned upwards towards one another into a position in which further turning of the frame beams 15 with respect to the main frame beam 2 is prevented by a stop or stops. In a known embodiment the main frame beam is provided with two resilient stops so that in the transport position the two frame beams 15 are in resilient contact with the stops so that, when the hydraulic pressure in the ram 17 is obviated, the resilient stops impart to the two frame beams 15 an outward impulse after which the frame beams 15 with the rake members fastened thereto turn downwards into the working position, whilst the hydraulic fluid flowing out of the cylinder is conducted away in a controller manner through a relatively light-structured relief valve. The invention proposes *inter alia* a simple replacement of these resilient stops, as will be explained more fully hereinbelow.

Each of the frame beams 15 is provided with a locking pin 20, which is horizontal and directed forwardly, whilst near each locking pin 20 at the end of the main frame beam 2 a lock bolt 21 is provided, which automatically falls around the neighbouring pin 20 during the upward turn of the frame beam 15 so that during transport the frame beams 15 are fixed in place.

To each of the lock bolts 21 is fastened a rope extending into the cab 8. When the driver wants to turn the frame beams 15 out of the transport position into the working position, the hydraulic ram 17 is briefly energized so that the driver can lift the lock bolts by pulling the ropes, after which the frame beams 15 are released to move downwards. Each of the outer parts of the haymaking machine 1, said parts having each a frame beam 15 and an outermost rake member 10, is provided with a screening member 22, which is substantially horizontal and is located, viewed with respect to the direction of travel, at least in this embodiment, in front of the outermost rake member 10. The bracket-shaped screening member 22 embraces the sides and, in addition, the front of the foremost half of the rake member 10 concerned in conformity to prevailing provisions. This protection is intended to prevent persons standing at the front or a side of the rake member from coming into contact with the driven tines and from thus being injured.

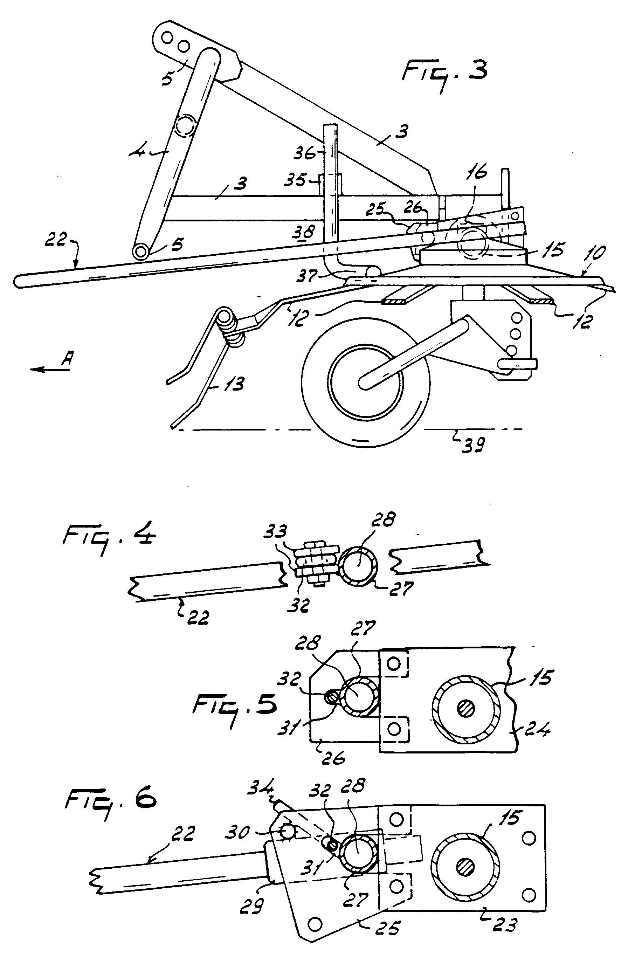

The mode of fastening of the bracket 22 is illustrated in Figs. 2 to 6.

Each of the frame beams 15 is provided at relatively spaced places with supporting plates 23 and 24 respectively, which are directed upwards and in the direction of travel A in the working position of the machine and which protrude in front of the frame beam 15. To the front of each of these plates is rigidly but releasbly secured a plate-shaped support 25 and 26 respectively, these supports 25 and 26 projecting to the front away from the plates 23 and 24. The supports 25 and 26 are, therefore, also rigidly secured with respect to the frame beam 15. Each of the supports 25 and 26 has on the rear side a cavity to receive a tubular shaft 27, the centre line 28 of which is parallel to that of the frame beam 15 and thus extends substantially horizontally and transversely of the direction of travel A during operation. From Fig. 2 it is apparent that to the two ends of the shaft 27 is rigidly secured the bracket 22 embracing the front part of the frame member 10. The bracket 22 together with the shaft 27 can turn in the space bounded by the parts 23, 25 and 24, 26 respectively, in which space the shaft 27 is journalled as a pivotal shaft.

Referring to Figs. 2 and 6, the shaft 27 is provided with a plate 29, which is parallel to the plate-shaped support 25, but, in contrast to the plate 25, is rigidly secured to the shaft 27. The plate 29 is located on the side of the support 25 away from the support 26 (at a short distance from said support) and projects forwardly beyond the shaft 27, as will be seen in Fig. 6.

To the plate 25 is rigidly secured a pin 30 perpendicular to the plate 25 and projecting for a given distance in the direction of the plate 29.

In the support 25 as well as in the support 26 is provided a recess 31, through which passes a torsion bar 32 substantially parallel to the centre line 28. This torsion bar 32 extends, viewed in the outward direction, (Fig. 2) beyond the plate 26 up to a plate-shaped clamp 33 which is rigidly secured to the shaft 27. The torsion bar 32 is bent back through 180° at the area of the clamp 33 and the bent-back end is located in the clamp 33, which is rigidly secured to the shaft 27. The other end of the torsion bar 32 extends through the recess 31 in the supporting plate 25 and is bent over in forward direction through 90° directly on the inner side of the plate 25 to form a rod portion 34. The rod portion 34 formed by the end of the torsion bar 32 is in contact with the pin 30 rigidly secured to the plate 25 near its free end (at a distance from the recess 31 in the plate 25) (Fig. 6).

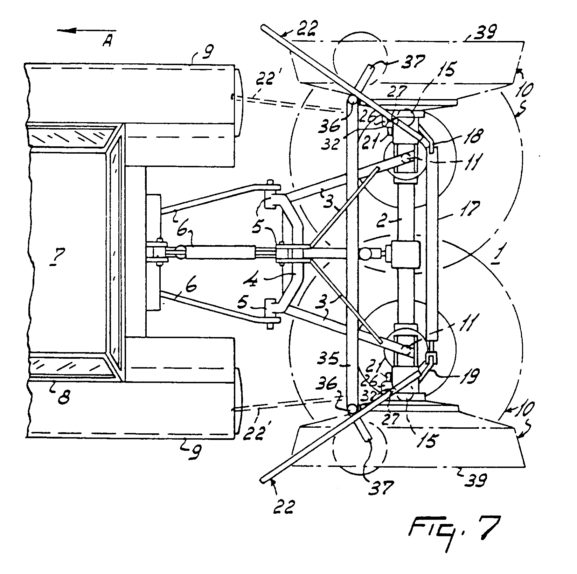

From Figs. 4 and 6 it is apparent that the rod portion 34 is upwardly inclined away from the recess 31, whereas the end near the clamp 33 is directed substantially horizontally or slightly downwardly. This means that the torsion bar 32 is prestressed. Since the rod portion 34 is supported with respect to the frame beam 15 via the pin 30, the support 25 and the supporting plate 23, the stressed torsion bar 32 tends to exert via the clamp 33 a torsional moment on the outermost end of the shaft 27 and the bracket 22 in upward direction. However, this is prevented since upon an upward turn of the bracket 22 and the shaft 27 the plate 29 rigidly secured to the shaft 27 will come into contact with the pin 30. Therefore, the bracket 22 and the shaft 27 being integral herewith have an internal bias tension which prevents the basically pivotable bracket 22 from rattling in a troublesome manner in the working position shown in Figs. 2 to 6.

To the supports 3 (Fig. 1) is secured a horizontal rod 35 extending transversely of the direction of travel and having at both ends stops formed by the two limbs 36 and 37 of an abutment pipe 38 bent through about 90°. The limb 36 of the pipe 38 is disposed, viewed in a direction transverse of the direction of travel A, at a short distance inside the inner boundary of the bracket 22 and is directed substantially vertically. The other limb 37, viewed in the direction towards its free end, is outwardly and rearwardly inclined and, as will be seen from Fig. 2, it is located below the inner part of the bracket 22. In this situation the above-mentioned bracket 22 having a bias tension during the operation of the machine is located at a relatively small distance above the limb 37 of the abutment pipe 38. The bracket 22 can turn downwards against the effect of the torsion bar 32 until the inner boundary of the bracket 22 strikes the limb 37. The precaution is taken with a view to persons coming into contact with the bracket 22: if the bracket 22 could turn freely downwards, said person would be in direct risk of contacting the rotating rake member 10. The stop 37 prevents this free downward turn and continues protecting. When the hydraulic ram 17 is actuated, the two frame beams 15 with the rake members 10 journalled thereon turn upwards, as stated above, in order to obtain a transport position in which the machine has a small width. During this upward turn the inner part of each bracket 22 comes into contact with the upwardly extending limb 36 of the stop 38. Upon a further turn of the frame beam 15 the bracket 22 is turned downwards with respect to the frame beam 15 (or rather outwards, if it is already in the upwardly turned position) into the final position shown in Fig. 7, in which the torsion bar 32 is fully or almost fully stressed. The force exerted by the torsion bar 32 is, in the position shown in Fig. 7, in equilibrium with the force exerted by the ram 17. In this final position the piston and the piston rod of the ram find themselves a stop with respect to the cylinder wall. From Fig. 7 it is apparent that the foremost part of the bracket 22 is located in a plane located beyond the plane of the tine ends of the outermost rake members 10, viewed with respect to the vertical plane of symmetry of the rotary haymaking machine. The plane going through the outermost ends of the tines of these outermost rake members is designated in Fig. 7 by reference numeral 39. It is thus ensured that persons located at the side of the travelling combination of tractor and haymaking machine are protected from contact with the tine ends of the outermost rape members.

Therefore, also in this second position the screening member is effective.

The displaced position of the bracket 22 shown in Fig. 7 results also in the advantage that, when the frame beams 15 are turned up, the bracket does not come into contact with tractor parts.

Referring to Fig. 7, reference numeral 22' designates the position, indicated by broken lines, in which the bracket 22 would be located, if the position of this bracket with respect to the frame beam 15 were maintained in the working state. In this case the bracket would have come into contact with tractor parts, in this case the mudguards 9. This involves that in accordance with the idea of the invention the machine can be attached at a smaller distance from the tractor or the lifting device 6 so that the position of the centre of gravity of the machine is improved with respect to the tractor.

A third advantage of the construction embodying the invention resides in that, as stated above, in the transport position of the haymaking machine the bracket 22 engages with spring tension the upright limb 36 of the abutment pipe 38 so that the reactive force is an outwardly directed force exerted on the frame beam 15, which is substantially vertical in the transport position. After, as described above, the tractor driver has lifted the lock bolts 21 by means of the ropes, the frame beams 15 with the outermost rake members 10 fastened thereto are urged outwardly by the spring tension produced by the brackets 22, after which the frame beams 15 and the outermost rake members can lower further into the working position by their own weight. As a result, the above-mentioned resilient stops can be dispensed with, since their function is taken over by the bracket 22.

## Claims

1. An agricultural implement comprising a frame (2, 15) connectable to a tractor and constituted by an inner main frame beam (2) and further outer frame beams (15) pivotable with respect to said main frame beam (2) about pivot shafts (14) substantially in the direction (A) of operative travel, which main frame beam (2) and further frame beams (15) extend in a first, operative position in a substantially horizontal direction transverse to the direction (A) of operative travel, the implement further comprising tractor drivable inner and outer rake members (10), each of the rake members (10) comprising a plurality of spokes (12) to the ends of which are secured groups of tines (13), the inner rake members being coupled to said main frame beam (2), the outer rake members being coupled to said further frame beams (15), and with said further frame beams (15) pivotable upwardly around said pivot shafts (14 ) in a second, transport position, the inner and outer rake members (10) in the first position being rotatable about upwardly directed rotary shafts (11), the implement still further comprising for each outer frame beam (15) at each side of the main frame beam (15) a protective member (22) which, with respect to the direction (A) of operative travel, protects in said first position of said rake members e.g. persons from contact with at least a foremost part of a rake member, connecting means (23, 24, 25, 26, 32, 30, 29) are provided between each protective member (22) and its corresponding outer rake member (10) to permit that said protective members (22) be moved into another position by moving the outer rake members into the second position, characterized in that each of the protective members (22) is rigid and embraces at least the foremost half of a respective rake member and that adjusting means (36, 37), different from the connecting means are provided, which limit the movement of the protective members caused by the outer rake members, such that the movement of the protective members is modified with respect to the movement which these would have if no adjusting means were provided, and such that the position of the protective members (22) relative to the respective outer rake members is automatically changed by moving the outer rake members hydraulically into the second position, the other position of the protective members (22) being forward and at least partially laterally outboard of the respective outer rake members, whereby protection of e.g. persons from contact with at least a foremost part of the outer rake member is maintained.

2. An agricultural implement as claimed in claim 1, characterized in that, when the outer rake members are pivoted from the first into the second position, the adjusting means (36, 37) urges each of the protective members (22) into the other position against resilient force (32).

3. An agricultural implement as claimed in claim 2, characterized in that the adjusting means (36, 37) comprises stop means (38) connected to the main frame beam (2) and engaging each of the protective members (22) during at least a part of their upward movement.

## Patentansprüche

1. Landwirtschaftliches Gerät mit einem Rahmen (2, 15), der an einen Schlepper anzuschließen und durch einen inneren Hauptrahmenbalken (2) sowie weitere äußere Rahmenbalken (15) gebildet ist, welche in bezug auf den Hauptrahmenbalken (2) um im wesentlichen in Arbeitsrichtung (A) liegende Schwenkachsen (14) zu schwenken sind, wobei sich der Hauptrahmenbalken (2) und die weiteren Rahmenbalken (15) in einer ersten Arbeitsstellung in im wesentlichen horizontaler Richtung quer zur Arbeitsrichtung (A) erstrecken, wobei das Gerät ferner durch einen Schlepper anzutreibende innere und äußere Rechkörper (10) hat, die jeweils mehrere Speichen (12) aufweisen, an deren Enden Gruppen von Zinken (13) befestigt sind, wobei die inneren Rechkörper mit dem Hauptrahmenbalken (2) und die äußeren Rechkörper mit den weiteren Rahmenbalken (15) verbunden sind, wobei die weiteren Rahmenbalken (15) um die Schwenkachsen (14) nach oben in eine zweite, nämlich eine Transportstellung zu schwenken sind, wobei die inneren und äußeren Rechkörper (10) in der ersten Stellung um aufwärts gerichtete Drehachsen (11) drehbar sind, wobei das Gerät weiterhin für jeden äußeren Rahmenbalken (15) auf jeder Seite des Hauptrahmenbalkens (15) ein Schutzteil (22) aufweist, das, bezogen auf die Arbeitsrichtung (A), in der ersten Stellung der Rechkörper Objekte, beispielsweise Personen, gegen den Kontakt mit mindestens einem vorderen Teil eines Rechkörpers abschirmt, und wobei zwischen jedem Schutzteil (22) und seinem zugehörigen äußeren Rechkörper (10) Verbindungsmittel (23, 24, 25, 26, 32, 30, 29) vorgesehen sind, um die Schutzteile (22) durch Bewegen der äußeren Rechkörper in die zweite Stellung in eine andere Position zu bewegen, dadurch gekennzeichnet, daß jedes der Schutzteile (22) steif ausgeführt ist und zumindest die vordere Hälfte eines zugehörigen Rechkörpers umgibt, und daß von den Verbindungsmitteln verschiedene Stellvorrichtungen (36, 37) vorgesehen sind, welche die durch die äußeren Rechkörper verursachte Bewegung der Schutzteile derart begrenzen, daß die Bewegung der Schutzteile im Vergleich zu der Bewegung verändert wird, die sie ausführen würden, wenn keine Stellvorrichtungen vorhanden wären, und derart, daß die Position der Schutzteile (22) relativ zu den zugehörigen äußeren Rechkörpern automatisch dadurch verändert wird, daß die äußeren Rechkörper hydraulisch in die zweite Stellung bewegt werden, wobei sich die Schutzteile (22) in ihrer anderen Position vorne und zumindest teilweise seitlich außerhalb der zugehörigen Rechkörper befinden, so daß eine Abschirmung z. B. von Personen gegen den Kontakt mit mindestens einem vorderen Teil des äußeren Rechkörpers gewährleistet ist.

2. Landwirtschaftliches Gerät nach Anspruch 1,
dadurch gekennzeichnet, daß die Stellvorrichtung (36, 37) jedes der Schutzteile (22) gegen Federkraft (32) in die andere Position bewegt, wenn die äußeren Rechkörper aus der ersten in die zweite Stellung geschwenkt werden.

3. Landwirtschaftliches Gerät nach Anspruch 2,
dadurch gekennzeichnet, daß die Stellvorrichtung (36, 37) Anschlagmittel (38) aufweist, die mit dem Hauptrahmenbalken (2) verbunden sind und mit jedem der Schutzteile (22) während mindestens eines Teiles von dessen Aufwärtsbewegung in Kontakt kommen.

## Revendications

1. Machine agricole comprenant un châssis (2, 15) pouvant être relié à un tracteur et constitué par une poutre de châssis principale (2) intérieure et d'autres poutres de châssis (15) extérieures pivotantes par rapport à ladite poutre de châssis principale (2) autour d'arbres de pivotement (14) substantiellement dans le sens de marche (A) du travail, laquelle poutre de châssis principale (2) et lesquelles autres poutres de châssis (15) s'étendent, dans une première position, la position de travail, dans une direction sensiblement horizontale transversale au sens de marche (A) du travail, la machine comprenant en outre des organes râteleurs (10) intérieurs et extérieurs, pouvant être entraînés par le tracteur, chacun des organes râteleurs (10) comprenant une pluralité de rayons (12) sur les extrémités desquels sont fixés des groupes de dents (13), les organes râteleurs intérieurs étant couplés à ladite poutre de châssis principale (2), les organes râteleurs extérieurs étant couplés auxdites autres poutres de châssis (15), et avec lesdites autres poutres de châssis (15) pivotantes vers le haut autour desdits arbres de pivotement (14) vers une deuxième position, la position de transport, les organes râteleurs (10) intérieurs et extérieurs dans la première position étant rotatifs autour d'arbres de rotation (11) dirigés vers le haut, la machine comprenant encore, en outre, pour chaque poutre de châssis extérieure (15), sur chaque côté de la poutre de châssis principale (2), un organe de protection (22) qui, par rapport au sens de marche (A) du travail, protège dans ladite première position desdits organes râteleurs, des personnes, par exemple, contre un contact avec au moins une partie la plus antérieure d'un organe râteleur, des organes de liaison (23, 24, 25, 26, 32, 30, 29) étant prévus entre chaque organe de protection (22) et son organe râteleur extérieur (10) correspondant pour permettre auxdits organes de protection (22) d'être entraînés en une autre position par le déplacement des organes râteleurs extérieurs vers la deuxième position,
**caractérisée** en ce que chacun des organes de protection (22) est rigide et entoure au moins la moitié antérieure d'un organe râteleur respectif, et en ce que sont prévus des moyens de réglage (36, 37) différents des organes de liaison, qui limitent le mouvement des organes de protection provoqué par les organes râteleurs extérieurs, de telle sorte que le mouvement des organes de protection est modifié par rapport au mouvement qu'ils auraient si des moyens de réglage n'étaient pas prévus, et de telle sorte que la position des organes de protection (22) par rapport aux organes râteleurs extérieurs respectifs est changée automatiquement par le fait d'entraîner hydrauliquement les organes râteleurs extérieurs vers la deuxième position, l'autre position des organes de protection (22) étant en avant et débordant latéralement, au moins partiellement, par rapport aux organes râteleurs extérieurs, ce qui maintient la protection des personnes, par exemple, contre un contact avec au moins une partie la plus antérieure de l'organe râteleur extérieur.

2. Machine agricole selon la revendication 1, caractérisée en ce que, quand les organes râteleurs extérieurs sont entraînés en pivotement de la première à la deuxième position, le moyen de réglage (36, 37) entraîne chacun des organes de protection (22) vers l'autre position, contre une force élastique (32).

3. Machine agricole selon la revendication 2, caractérisée en ce que le moyen de réglage (36, 37) comprend des moyens de butée (38) reliés à la poutre de châssis principale (2) et s'engageant contre chacun des organes de protection (22) pendant au moins une partie de leur mouvement vers le haut.
